# EUROPÄISCHE PATENTSCHRIFT

(11) **EP 2 047 891 B1**
(45) Veröffentlichungstag und Bekanntmachung des Hinweises auf die Patenterteilung: **04.01.2012**
(21) Anmeldenummer: 08405253.9
(22) Anmeldetag: 06.10.2008
(51) Int. Cl.: A63C 7/02, C08J 5/00, C09J 153/00, C09D 143/04, C09J 143/04, C01B 33/44, C08G 77/02, C08F 293/00, A63C 7/04, C09D 183/04, C09K 3/14

(54) **Steighilfe für Schneesportgeräte**
Climbing assistance for snow sport equipment
Aide à la montée pour appareils de sports d'hiver

(30) Priorität: 10.10.2007 CH 15692007
(43) Veröffentlichungstag der Anmeldung: 15.04.2009
(73) Patentinhaber: Tödi Sport AG, Glarus, 8750 Glarus (CH)
(72) Erfinder: Kägi-Zweifel, Margrith, 8737 Gommiswald (CH); Chlibowycz, Peter, 4632 Pichl bei Wels (AT); Giebel, Horst, 8738 Uetliburg (CH)
(74) Vertreter: Groner, Manfred

(56) Entgegenhaltungen:
- EP-A- 1 992 390
- WO-A-02/062881
- WO-A-2004/035649
- WO-A-2007/072189
- DE-A1- 4 309 488
- DE-A1- 10 353 890
- DE-A1-102005 022 782
- US-A1- 2004 029 980
- US-B1- 7 393 901

## Beschreibung

Die Erfindung betrifft eine Steighilfe für Schneesportgeräte, insbesondere Skis gemäss Oberbegriff des Anspruchs 1.

Für Tourenskis sind seit langem Steigfelle bekannt, die auf der Rückseite eine Klebeschicht besitzen, mit der das Steigfell lösbar auf der Unterseite des Skis befestigt werden kann. Zusätzlich zur Befestigung mit der Klebeschicht kann das Steigfell an der Spitze des Skis und/oder am Ende mechanisch mit einem Haken oder dergleichen befestigt sein. Solche Steigfelle haben sich in der Praxis an sich bewährt. Eine Schwierigkeit ist jedoch die Temperaturbeständigkeit. Bei Tourenskis ist mit Temperaturen von etwa -30 bis +30 Grad zu rechnen. Bei sehr tiefen Temperaturen lässt die Haftung der Klebeschicht wesentlich nach. Bei hohen Temperaturen hingegen kann das Skifell in der Regel nicht mehr ohne Rückstände vom Ski abgezogen werden. Ein weiteres Problem ist die Verschmutzung, welche die Haftung beeinträchtigen kann.

Die DE 43 09 488 A offenbart ein solches Steigfell. Bei diesem Steigfell wird die selbstklebende Klebeschicht streifenförmig aufgetragen. Der Kleber ist ein üblicher bekannter Kleber.

Die US 2004/0029980 A offenbart einen Schmelzklebstoff für Verpackungen. Mit diesem Klebstoff können zwei Teile einer Verpackung im Wesentlichen unlösbar miteinander verbunden werden. Für die Befestigung einer Steighilfe an einem Schneesportgerät eignet sich ein Schmelzklebstoff nicht.

Die DE-10 2005 022 782 A offenbart eine Haftklebemasse, die ein Polymer und Füllstoffpartikel aufweist. Diese ist zum Aufbau von Selbstklebebändern oder Selbstklebefolien vorgesehen.

Die WO 2004/035649 offenbart ein Verfahren zur Modifizierung der Oberfläche von Nanopartikeln und eine Dispersion mit solchen Nanopartikeln.

Der Erfindung liegt die Aufgabe zu Grunde, eine Steighilfe der genannten Art zu schaffen, welche die genannten Nachteile vermeidet.

Die Aufgabe ist bei einer gattungsgemässen Steighilfe gemäss Anspruch 1 gelöst. Die Haftschicht weist ein elastomeres Polymer als Basis auf, in das Nanopartikel zur Formgebung der Haftschicht reaktiv eingearbeitet sind. Eine solche Haftschicht bildet keinen Klebstoff, sondern eine Kunststoffbeschichtung mit selbsthaftender Wirkung. Das elastomere Polymer ist hierbei vorzugsweise ein Silikon. Grundsätzlich sind aber auch andere elastomere Polymere denkbar, wie beispielsweise Polyurethan, Metacrylat oder ein Epoxid. Mit einem solchen elastomeren Polymer und reaktiv eingearbeiteten Nanopartikeln kann eine Kunststoffbeschichtung hergestellt werden, die in einem weiten Temperaturbereich weitgehend konstante mechanische Eigenschaften besitzt. Der Bereich ist sowohl bezüglich der tiefen Temperaturen als auch der hohen Temperaturen wesentlich grösser als der oben genannte Bereich. Die Haftschicht besitzt zudem eine gute Witterungs-, UV- und Alterungsbeständigkeit. Eine wesentliche Erleichterung und ein Vorteil besteht zudem darin, dass eine Abdeckfolie nicht erforderlich ist. Bei dem bisher bekannten Kleber war eine solche Abdeckfolie erforderlich. Diese musste jeweils bei Aufbringen der Steighilfe abgezogen und anschliessend nach Entfernen der Steighilfe vom Ski wieder aufgebracht werden.

Vor allem bei der Herstellung des Polymers aus Silikon, ergibt sich der weitere Vorteil, dass die Haftschicht selbstreinigende Wirkung besitzt. Dies vor allem in Schnee und Wasser. Eingedrungene Schnee- und Eisteile sowie Wasser werden unter Druck selbstreinigend entfernt. Weitere Vorteile sind die exzellente Umweltverträglichkeit, die gute physiologische Verträglichkeit und die Lebensmittelechtheit. Toxikologisch ist die genannte Haftschicht unbedenklich. Schliesslich ist die Haftschicht in jeder Farbe einfärbbar, ungiftig, einstellbar bezüglich Rheologie, Viskosität und Haftung und abwaschbar

Als besonders geeignet hatten sich Nanopartikel erwiesen, die aus einem Silikat hergestellt sind. Vorzugsweise sind diese gemäss einer Weiterbildung der Erfindung mit einem Silan beschichtet. Dies ermöglicht eine besonders Vernetzung und Verbindung der Nanopartikel mit dem elastomeren Polymer. Die Nanopartikel können dann besonders homogen im Polymer verteilt werden.

Die Erfindung betrifft zudem einen Haftstoff zum Herstellen einer Haftschicht auf einer erfindungsgemässen Steighilfe für ein Schneesportgerät. Dieser Haftstoff weist ein elastomeres aushärtbares Polymer als Basis auf, in das Nanopartikel zur Formgebung reaktiv eingearbeitet sind, wobei der Haftstoff kalt auftragbar und aushärtbar ist. Vorzugsweise weist der Haftstoff einen Katalysator zum aditiven Aushärten des Haftstoffes auf. Der Haftstoff kann vergleichsweise flüssig auf die Tragschicht aufgetragen werden. Dies ergibt eine besonders hohe Haftung der Haftschicht auf den Träger, da der flüssige Haftstoff die Fasern der Tragschicht hinterwandern kann. Nach dem Auftragen kann die Haftschicht durch Erwärmen vernetzt und ausgehärtet werden, bis die vorgesehene Viskosität erreicht ist. Das Auftragen kann mit einem Rakel, einer Auftragswalze oder beispielsweise durch Sprühen erfolgen. Die Vernetzungstemperatur kann beispielsweise 95 - 130 Grad Celsius betragen. Es sind hier aber andere Temperaturen denkbar. Das Polymer ist auch in diesem Fall vorzugsweise Silikon.

Die Erfindung betrifft zudem ein Verfahren zum Herstellen einer erfindungsgemässen Steighilfe für Schneesportgeräte. Das Verfahren ist dadurch gekennzeichnet, dass der Haftstoff in flüssiger Form kalt auf eine Tragschicht aufgebracht wird und dass der aufgebrachte Haftstoff durch Erwärmen bis zum Erreichen einer vorgesehenen Viskosität vernetzt wird.

Weitere vorteilhafte Merkmale ergeben sich aus den abhängigen Patentansprüchen, der nachfolgenden Beschreibung sowie der Zeichnung.

Ausführungsbeispiel der Erfindung wird nachfolgend anhand der Zeichnung näher erläutert. Es zeigen
- Figur 1: ein Schnitt durch einen Abschnitt eines Skis mit einem an diesem befestigten Steigfell und
- Figur 2: ein Schnitt durch einen Abschnitt der erfindungsgemässen Steighilfe in stark vergrössertem Massstab.

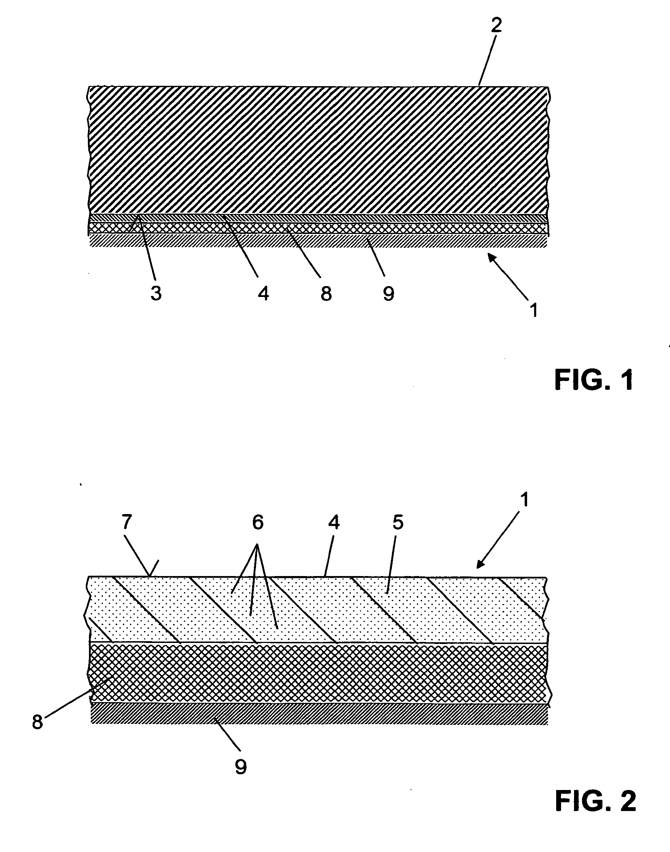

Die Figur 1 zeig Abschnittsweise einen Ski 2, der eine Unterseite 3 aufweist, an der ein erfindungsgemässes Steigfell 1 befestigt ist. Der Ski 2 kann auch ein anderes Schneesportgerät sein, das eine Steighilfe benötigt. Ein solches Schneesportgerät ist beispielsweise auch ein Schneeschuh, an dessen Unterseite ein Steigfell 1 befestigt ist. Es sind hier aber auch andere Schneesportgeräte denkbar.

Das Steigfell besitzt eine Tragschicht 8, die insbesondere aus einem Textil hergestellt ist. Diese Tragschicht 8 kann eine an sich bekannte Tragschicht aus Baumwolle oder einem synthetischen Mischgewebe sein. Dieses besitzt an einer Unterseite einen Flor 9, dem bekannterweise einen Halt gegen Zurückrutschen im Schnee gewährleistet. Der Flor 9 ist beispielsweise ein Plüsch.

Auf eine Oberseite der Tragschicht 8 ist eine Haftschicht 4 aufgetragen. Diese besitzt eine Oberseite 7, an welcher das Steigfell 1 an der Unterseite 3 des Skis 2 haftet. Die Dicke dieser Haftschicht beträgt beispielsweise 0,1 bis 0,4 mm.

Die Haftschicht 4 besteht aus einem elastomeren Polymer 5, in das Nanopartikel 6 reaktiv eingearbeitet sind. Die Nanopartikel 6 sind von Auge selbstverständlich nicht sichtbar und weitgehend homogen im elastomeren Polymer 5 verteilt.

Das elastomere Polymer 5 ist insbesondere ein Silikon, das katalytisch vernetzt ist. Ein geeigneter Katalysator ist beispielsweise Platin. Das Polymer 5 kann aber auch ein anderes elastomeres Polymer, beispielsweise Polyurethan, ein Silan terminiertes Polyurethan (SPUR) ein Metacrylat oder ein Epoxid sein.

Die Nanopartikel 6 sind vorzugsweise und beispielsweise Partikel aus SiO₂, die mit einem Silan beschichtet sind. Anstelle von SiO₂ sind aber auch andere anorganische Nanopartikel denkbar, welche der Haftschicht 4 die erforderliche mechanische Stabilität und Elastizität verleihen. Die Haftschicht 4 geht somit nach einer Deformation wieder vollständig in den Ausgangszustand zurück. Vorzugsweise beträgt der Druckverformungsrest (DVR) gemäss dem Prüfnaomen DIN oder ASTM weniger als 10%. Aufgrund der Silanbeschichtung sind die Nanopartikel chemisch mit dem Polymer 5 verbunden. Zudem sind die Nanopartikel 6 kolloidal verteilt.

Zum Herstellen der Haftschicht 4 wird diese in weitgehend flüssigem Zustand auf die Tragschicht 8 aufgetragen. Das Auftragen kann mit einer Rakel, einer Auftragswalze oder durch Sprühen erfolgen. Das Auftragen kann kalt erfolgen. Nach dem Auftragen wird die Schicht 4 erwärmt, wodurch das elastomere Polymer katalytisch vernetzt wird und schliesslich die geforderte Viskosität erreicht. Die Vernetzungstemperatur liegt beispielsweise im Bereich von 95 Grad Celsius bis 130 Grad Celsius. Höhere Temperaturen verkürzen entsprechend die Vernetzungszeit. Der Anteil des Katalysators, beispielsweise Platin, beträgt beispielsweise 30 ppm.

Die vernetzte und gebrauchsfähige Haftschicht 4 ist auch nachvernetzbar. Sie kann durch weitere Vernetzung repariert werden. Ein Reparieren kann mit zwei Komponenten erfolgen, wobei die eine Komponente beispielsweise Vinyldimethylsilan mit einem Platinkatalysator und die andere Komponente wasserstoffterminiertes Polydimethylsiloxan ist. Beschädigungen der Haftschicht 4 können somit vergleichsweise einfach vollständig repariert werden.

Die Haftschicht 4 ist hydrophob und eingedrungenes Eis und Schnee wird unter Druck ausgeschieden. Die Haftschicht 4 ist zudem nicht anfällig auf die Entwicklung von Schimmelpilzen. Sie ist zudem abwaschbar und benötigt keine Abdeckfolie. Dadurch kann die Steighilfe bzw. das Steigfell 1 wesentlich einfacher als bisher gehandhabt werden. Ausser der Haftung durch die Haftschicht 4, kann das Steigfell 1 am vorderen und hinteren Ende des Skis 2 mechanisch mit einem hier nicht gezeigten Haken oder dergleichen lösbar befestig werden.

### Bezugszeichenliste

- 1: Steigfell
- 2: Ski
- 3: Unterseite
- 4: Haftschicht
- 5: Polymer
- 6: Nanopartikel
- 7: Fläche
- 8: Tragschicht
- 9: Flor

## Patentansprüche

1. Steighilfe für Schneesportgeräte, insbesondere Skis, mit einer Tragschicht (8), die auf einer Seite eine Haftschicht (4) aufweist, mit welcher die Steighilfe selbsthaftend und lösbar auf dem Schneesportgerät (2) befestigbar ist, **dadurch gekennzeichnet, dass** die Haftschicht (4) ein elastomeres Polymer (5) als Basis aufweist, in das Nanopartikel (6) zur Formgebung der Haftschicht (4) reaktiv eingearbeitet sind und die eine Kunststoffbeschichtung mit selbsthaftender Wirkung ist.

2. Steighilfe nach Anspruch 1, **dadurch gekennzeichnet, dass** das Polymer (5) ein Silikon, ein Polyurethan, ein Metacrylat oder ein Epoxid ist.

3. Steighilfe nach Anspruch 1 oder 2, **dadurch gekennzeichnet, dass** die Nanopartikel (6) kolloidal in das Polymer (5) eingearbeitet sind.

4. Steighilfe nach einem der Ansprüche 1 bis 3, **dadurch gekennzeichnet, dass** die Nanopartikel (6) aus einem Silikat hergestellt sind.

5. Steighilfe nach einem der Ansprüche 1 bis 4, **dadurch gekennzeichnet, dass** die Nanopartikel (6) mit einem Silan beschichtet sind.

6. Steighilfe nach einem der Ansprüche 1 bis 5, **dadurch gekennzeichnet, dass** die Nanopartikel (6) im wesentlichen homogen im Polymer (5) verteilt sind.

7. Steighilfe nach einem der Ansprüche 1 bis 5, **dadurch gekennzeichnet, dass** sie ein Steigfell für Skis ist.

8. Steighilfe nach einem der Ansprüche 1 bis 6, **dadurch gekennzeichnet, dass** die Tragschicht (8) aus einem Gewebe insbesondere aus Baumwolle oder einem synthetischen Mischgewebe hergestellt ist.

9. Haftstoff zum Herstellen einer Haftschicht (4) auf einer Steighilfe gemäss einem der Ansprüche 1 bis 8, **dadurch gekennzeichnet, dass** er ein elastomeres aushärtbares Polymer (5) als Basis aufweist und dass in das elastomere Polymer (5) Nanopartikel (6) zur Formgebung reaktiv eingearbeitet sind, wobei der Haftstoff kalt auftragbar und aushärtbar ist, wobei er im ausgehärteten Zustand eine Kunststoffbeschichtung mit selbsthaftender Wirkung ist.

10. Haftstoff nach Anspruch 9, **dadurch gekennzeichnet, dass** er einen Katalysator zum additiven Aushärten des Haftstoffes aufweist.

11. Haftstoff nach Anspruch 9 oder 10, **dadurch gekennzeichnet, dass** er in fliessendem Zustand auf eine Tragschicht (8) aufbringbar ist.

12. Haftstoff nach einem der Ansprüche 9 bis 11, **dadurch gekennzeichnet, dass** er mit einem Rakel, einer Auftragswalze oder durch Sprühen auftragbar ist.

13. Haftstoff nach einem der Ansprüche 9 bis 12, **dadurch gekennzeichnet, dass** die Nanopartikel (6) mit einem Silan beschichtet sind.

14. Verfahren zum Herstellen einer Steighilfe gemäss einem der Ansprüche 1 bis 8, insbesondere eines Steigfelles für Skis (2), unter Verwendung eines Haftstoffes nach einem der Ansprüche 9 bis 13, **dadurch gekennzeichnet, dass** der Haftstoff in flüssiger Form kalt auf die Tragschicht (8) aufgebracht wird und dass der aufgebrachte Haftstoff durch Erwärmen bis zum Erreichen einer vorgesehenen Viskosität vernetzt wird.

15. Verfahren nach Anspruch 14, **dadurch gekennzeichnet, dass** die Vernetzungstemperatur 95 bis 130 Grad Celsius beträgt.

16. Verfahren nach Anspruch 14 oder 15, **dadurch gekennzeichnet, dass** der Haftstoff beim Erwärmen katalytisch aushärtet.

17. Verfahren nach einem der Ansprüche 14 bis 16, **dadurch gekennzeichnet, dass** der Haftstoff mit einem Rakel, einer Auftragswalze oder durch Sprühen auf die Tragschicht (8) aufgebracht wird.

## Claims

1. Climbing aid for snow sports equipment, in particular skis, with a supporting layer (8), which on one side has an adhesive layer (4), with which the climbing aid can be fastened on the snow sports equipment (2) in a self-adhesive and detachable manner, **characterized in that** the adhesive layer (4) has an elastomeric polymer (5) as a base, in which nanoparticles (6) are reactively incorporated to determine the form of the adhesive layer (4), which is a polymer coating with a self-adhesive substance.

2. Climbing aid according to Claim 1, **characterized in that** the polymer (5) is a silicone, a polyurethane, a methacrylate or an epoxy.

3. Climbing aid according to Claim 1 or 2, **characterized in that** the nanoparticles (6) are colloidally incorporated in the polymer (5).

4. Climbing aid according to one of Claims 1 to 3, **characterized in that** the nanoparticles (6) are produced from a silicate.

5. Climbing aid according to one of Claims 1 to 4, **characterized in that** the nanoparticles (6) are coated with a silane.

6. Climbing aid according to one of Claims 1 to 5, **characterized in that** the nanoparticles (6) are distributed substantially homogeneously in the polymer (5).

7. Climbing aid according to one of Claims 1 to 5 **characterized in that** it is a climbing skin for skis.

8. Climbing aid according to one of Claims 1 to 6, **characterized in that** the supporting layer (8) is produced from a woven fabric, in particular from cotton or a synthetic blended fabric.

9. Adhesive substance for producing an adhesive layer (4) on a climbing aid according to one of claims 1 to 8, **characterized in that** it has an elastomeric curable polymer (5) as a base and **in that** nanoparticles (6) are reactively incorporated in the elastomeric polymer (5) to determine the form, the adhesive substance allowing itself to be applied cold and to be cured, wherein it is in the cured state a polymer coating having a self-adhesive effect.

10. Adhesive substance according to Claim 9, **characterized in that** it has a catalyst (for example platinum) for the additive curing thereof.

11. Adhesive substance according to Claim 9 or 10, **characterized in that** it can be applied to a supporting layer (8) in a flowing state.

12. Adhesive substance according to one of Claims 9 to 11, **characterized in that** it can be applied with a doctor blade, an application roller or by spraying.

13. Adhesive substance according to one of Claims 9 to 12, **characterized in that** the nanoparticles (6) are coated with a silane.

14. Method for producing a climbing aid according to one of claims 1 to 8, in particular a climbing skin for skis (2), using an adhesive substance according to one of Claims 9 to 13, **characterized in that** the adhesive substance is applied to the supporting layer (8) in liquid form when cold and **in that** the applied adhesive substance is crosslinked by heating until a intended viscosity is reached.

15. Method according to Claim 14, **characterized in that** the crosslinking temperature is 95 to 130 degrees Celsius.

16. Method according to Claim 14 or 15, **characterized in that** the adhesive substance catalytically cures under heating.

17. Method according to one of Claims 14 to 16, **characterized in that** the adhesive substance is applied to the supporting layer (8) with a doctor blade, an application roller or by spraying.

## Revendications

1. Aide de montée pour dispositif de sport de neige, notamment skis, comprenant une couche support (8) qui comprend sur un côté une couche adhésive (4), avec laquelle l'aide de montée est fixable de manière autoadhésive et décollable sur le dispositif de sport de neige (2), **caractérisée en ce que** la couche adhésive (4) comprend un polymère élastomère (5) en tant que base, dans lequel des nanoparticules (6) sont incorporées de manière réactive pour le façonnage de la couche adhésive (4) et qui est un revêtement plastique à action autoadhésive.

2. Aide de montée selon la revendication 1, **caractérisée en ce que** le polymère (5) est une silicone, un polyuréthane, un méthacrylate ou un époxyde.

3. Aide de montée selon la revendication 1 ou 2, **caractérisée en ce que** les nanoparticules (6) sont incorporées de manière colloïdale dans le polymère (5).

4. Aide de montée selon l'une quelconque des revendications 1 à 3, **caractérisée en ce que** les nanoparticules (6) sont fabriquées en un silicate.

5. Aide de montée selon l'une quelconque des revendications 1 à 4, **caractérisée en ce que** les nanoparticules (6) sont revêtues avec un silane.

6. Aide de montée selon l'une quelconque des revendications 1 à 5, **caractérisée en ce que** les nanoparticules (6) sont réparties de manière essentiellement homogène dans le polymère (5).

7. Aide de montée selon l'une quelconque des revendications 1 à 5, **caractérisée en ce qu'**il s'agit d'une peau de phoque pour skis.

8. Aide de montée selon l'une quelconque des revendications 1 à 6, **caractérisée en ce que** la couche support (8) est fabriquée en un tissu, notamment en coton ou en un tissu synthétique mixte.

9. Substance adhésive pour la fabrication d'une couche adhésive (4) sur une aide de montée selon l'une quelconque des revendications 1 à 8, **caractérisée en ce qu'**elle comprend un polymère élastomère durcissable (5) en tant que base et **en ce que** des nanoparticules (6) sont incorporées d'une manière réactive dans le polymère élastomère (5) pour le façonnage, la substance adhésive étant applicable et durcissable à froid, la substance adhésive étant à l'état durci un revêtement plastique à action autoadhésive.

10. Substance adhésive selon la revendication 9, **caractérisée en ce qu'**elle comprend un catalyseur pour le durcissement supplémentaire de la substance adhésive.

11. Substance adhésive selon la revendication 9 ou 10, **caractérisée en ce qu'**elle est applicable à l'état fluide sur une couche support (8).

12. Substance adhésive selon l'une quelconque des revendications 9 à 11, **caractérisée en ce qu'**elle est applicable avec une racle, un cylindre d'application ou par pulvérisation.

13. Substance adhésive selon l'une quelconque des revendications 9 à 12, **caractérisée en ce que** les nanoparticules (6) sont revêtues avec un silane.

14. Procédé de fabrication d'une aide de montée selon l'une quelconque des revendications 1 à 8, notamment d'une peau de phoque pour skis (2), utilisant une substance adhésive selon l'une quelconque des revendications 9 à 13, **caractérisé en ce que** la substance adhésive est appliquée sous forme liquide à froid sur la couche support (8) et **en ce que** la substance adhésive appliquée est réticulée par chauffage jusqu'à atteindre une viscosité prévue.

15. Procédé selon la revendication 14, **caractérisé en ce que** la température de réticulation est de 95 à 130 degrés Celsius.

16. Procédé selon la revendication 14 ou 15, **caractérisé en ce que** la substance adhésive est durcie catalytiquement lors du chauffage.

17. Procédé selon l'une quelconque des revendications 14 à 16, **caractérisé en ce que** la substance adhésive est appliquée avec une racle, un cylindre d'application ou par pulvérisation sur la couche support (8).
